# EUROPEAN PATENT APPLICATION

(11) **EP 4 838 442 A1**
(43) Date of publication of application: **11.11.2026**
(21) Application number: 25305648.5
(22) Date of filing: 07.05.2025
(51) Int. Cl.: G06Q 20/10, G06Q 20/38, G06Q 20/40, H04L 9/32, H04L 9/40

(54) **SYSTEM AND METHOD FOR ENHANCING ONE TIME PASSWORD (OTP)**

(71) Applicant: THALES DIS FRANCE SAS, 92190 Meudon (FR)
(72) Inventor: BISHT, Tribhuwan, 110053 Delhi (IN); KAKKIRALA, Lakshmana Mani Pavan, 500015 Secunderabad Telangana (IN)
(74) Representative: Quintero Romero, Manuel

(57) **Abstract**

A system (100) and method (500) for enhancing a One Time Password (OTP) is disclosed. The method (500) comprises receiving a first request associated with enabling an OTP service from a user device (112). The method (500) further comprises storing a plurality of intent codes using the user device (112). Further, the method (500) comprises receiving a second request associated with a transaction from the user device (112 or an unauthorized entity 118). The method (500) further comprises generating the OTP in response to the second request. Further, the method (500) comprises enabling the user device (112) to transmit the generated OTP along with one of the plurality of intent codes to an institution system (116). The method (500) further comprises processing the second request based on the transmitted OTP and the associated one of the plurality of intent codes to the institution system (116).

## Description

### FIELD OF USE

The present disclosure relates to field of security, and more specifically to a system and a method for enhancing a One Time Password (OTP).

### BACKGROUND

One-Time Passwords (OTPs) have long been a critical security mechanism for authenticating users in various digital transactions, comprising online banking, e-commerce, and secure access systems. Unlike static passwords, which can be reused and are vulnerable to credential theft, OTPs are designed to be valid for a single transaction or a limited time window. This provides an additional layer of security by ensuring that even if an OTP is intercepted, it cannot be used again for unauthorized access. The OTPs provide an additional layer of protection by ensuring that only the rightful user, possessing a registered device, can authorize sensitive operations.

However, despite the intended security benefits of the OTPs, OTP-based authentication mechanisms have become increasingly vulnerable to sophisticated fraud attacks. Cybercriminals have developed various techniques, such as phishing, man-in-the-middle (MITM) attacks, SIM swapping, and social engineering, to intercept OTPs and execute unauthorized transactions. Phishing attacks, where users are tricked into providing their OTPs on fraudulent websites or via deceptive messages, have surged in recent years.

SIM swapping and mobile device cloning have further exacerbated OTP vulnerabilities. In SIM swap fraud, attackers deceive mobile carriers into transferring a victim's phone number to a new SIM card under their control. This allows fraudsters to receive OTPs intended for the victim, enabling them to bypass authentication barriers. This technique is particularly dangerous in the financial sector, where OTPs are used to authorize high-value transactions. Additionally, social engineering attacks have become more prevalent, with fraudsters impersonating trusted entities, such as banks or government agencies, to manipulate users into revealing their OTPs. Many users unknowingly share their OTPs, believing they are communicating with legitimate service providers, leading to significant financial losses.

Therefore, there is a need for a more efficient, flexible, and scalable solution for enhancing security of the OTPs.

### SUMMARY

The following embodiments presents a simplified summary in order to provide a basic understanding of some aspects of the disclosure. This summary is not an extensive overview, and it is not intended to identify key/critical elements or to delineate the scope thereof. Its sole purpose is to present some concepts in a simplified form as a prelude to the more detailed description that is presented later.

Some example embodiments disclosed herein provide a method for enhancing a One Time Password (OTP), the method comprising receiving, by a processing engine, a first request associated with enabling an OTP service from a user device. Further, the method comprising storing, by the processing engine, a plurality of intent codes using the user device. The method further comprises receiving, by the processing engine, a second request associated with a transaction from the user device or an unauthorized entity. Further, the method comprises generating, by the processing engine, the OTP in response to the second request. Further, the method comprises enabling, by the processing engine, the user device to transmit the generated OTP along with one of the plurality of intent codes to an institution system. Further, the method comprises processing, by the processing engine, the second request based on the transmitted OTP and the associated one of the plurality of intent codes to the institution system.

According to some example embodiments, each of the plurality of intent codes corresponds to a transaction type of the second request, and the plurality of intent codes are predefined by the user device.

According to some example embodiments, upon generating the OTP, the method further comprising transmitting the generated OTP to the user device from the institution system.

According to some example embodiments, the OTP and one of the plurality of intent codes is transmitted to the institution system within a predefined time period to be considered valid for processing the second request.

According to some example embodiments, processing the second request based on the transmitted OTP and the associated one of the plurality of intent codes to the institution system, the method comprising at least one of authorizing the transaction associated with the second request, if the intent code matches with the transaction type of the second request and rejecting the transaction associated with the second request, if the intent code does not match with the transaction type of the second request.

Some example embodiments disclosed herein provide a system for enhancing a One Time Password (OTP), the system comprises a processing engine coupled to a memory. The processing engine is configured to execute instructions stored in the memory to receive a first request associated with enabling an OTP service from a user device. Further, the processing engine is configured to execute instructions stored in the memory to store a plurality of intent codes using the user device. The processing engine is configured to execute instructions stored in the memory to receive a second request associated with a transaction from the user device or an unauthorized entity. Further, the processing engine is configured to execute instructions stored in the memory to generate the OTP in response to the second request. The processing engine is further configured to execute instructions stored in the memory to enable the user device to transmit the generated OTP along with one of the plurality of intent codes to an institution system. Further, the processing engine is further configured to execute instructions stored in the memory to process the second request based on the transmitted OTP and the associated one of the plurality of intent codes to the institution system.

Some example embodiments disclosed herein provide a non-transitory computer-readable medium storing computer-executable instructions for enhancing a One Time Password (OTP), the computer-executable instructions configured for receiving, by a processing engine, a first request associated with enabling an OTP service from a user device. Further, the computer-executable instructions configured for storing, by the processing engine, a plurality of intent codes using the user device. Further, the computer-executable instructions configured for receiving, by the processing engine, a second request associated with a transaction from the user device or an unauthorized entity. The computer-executable instructions configured for generating, by the processing engine, the OTP in response to the second request. Further, the computer-executable instructions configured for enabling, by the processing engine, the user device to transmit the generated OTP along with one of the plurality of intent codes to an institution system. The computer-executable instructions configured for processing, by the processing engine, the second request based on the transmitted OTP and the associated one of the plurality of intent codes to the institution system.

### DEFINITIONS

The term "One Time Password (OTP)" as used herein in the specification may refer to a security feature used for authentication, where a temporary password is generated for a single login session or transaction. The OTPs are commonly used in online banking, e-commerce, and secure system access to provide an extra layer of security beyond traditional passwords.

The term "Intent codes" as used herein in the specification may refer to an additional security layer incorporated into the OTP authentication process. The intent codes are user-configured numeric or alpha-numeric codes that convey the intended purpose of a transaction along with the OTP. By requiring the user to input an intent code along with the OTP, the system can verify whether the transaction aligns with the user's expected action before approving it.

The term "Phishing" as used herein in the specification may refer to a cyberattack in which fraudsters impersonate legitimate organizations or individuals to deceive victims into revealing sensitive information, such as usernames, passwords, OTPs, or financial details. The phishing attacks are typically carried out through emails, text messages (smishing), phone calls (vishing), or fake websites designed to look like official platforms.

The term "Subscriber Identity Module (SIM) swapping" as used herein in the specification may refer to a type of identity theft where a fraudster transfers a victim's mobile number to a new SIM card under their control. The SIM swapping allows the attacker to intercept calls, text messages, and the OTPs meant for the victim, enabling them to bypass two-factor authentication (2FA) and gain access to sensitive accounts, such as bank accounts, email, and cryptocurrency wallets.

### BRIEF DESCRIPTION OF DRAWINGS

The above and still further example embodiments of the present disclosure will become apparent upon consideration of the following detailed description of embodiments thereof, especially when taken in conjunction with the accompanying drawings.
FIG. 1 illustrates a block diagram of an exemplary system for enhancing a One Time Password (OTP), in accordance with an exemplary embodiment.
FIG. 2 illustrates a functional block diagram of various modules within a memory of the system for enhancing the OTP, in accordance with an exemplary embodiment.
FIG. 3 illustrates an exemplary flow chart for enhancing the OTP, in accordance with an exemplary embodiment.
FIG. 4 illustrates an exemplary flow chart for enhancing the OTP, in accordance with an exemplary embodiment.
FIG. 5 illustrates an exemplary flow chart of a method for enhancing the OTP, in accordance with an exemplary embodiment.
FIG. 6 illustrates an exemplary computing system for implementation of a method for remote Personal Identification Number (PIN) mailing, in accordance with an exemplary embodiment.

The figures illustrate embodiments of the disclosure for purposes of illustration only. One skilled in the art will readily recognize from the following description that alternative embodiments of the structures and methods illustrated herein may be employed without departing from the principles of the disclosure herein.

### DETAILED DESCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, systems, apparatuses, and methods are shown in block diagram form only in order to avoid obscuring the present disclosure.

Reference in this specification to "one embodiment" or "an embodiment" or "example embodiment" means that a particular feature, structure, or characteristic described in connection with the embodiment is comprised in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

The terms "comprise", "comprising", "includes", or any other variations thereof, are intended to cover a non-exclusive inclusion, such that a setup, device, or method that comprises a list of components or steps does not comprise only those components or steps but may comprise other components or steps not expressly listed or inherent to such setup or device or method. In other words, one or more elements in a system or apparatus proceeded by "comprises... a" does not, without more constraints, preclude the existence of other elements or additional elements in the system or method.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

With the increasing reliance on digital transactions, online banking, and multi-factor authentication systems, the OTPs have become a widely used security mechanism to verify user identity. The OTPs provide an additional layer of authentication by ensuring that access to sensitive accounts and transactions requires a temporary, single-use code. Financial institutions, e-commerce platforms, and various online services have implemented OTP-based authentication to enhance security and prevent unauthorized access. However, despite the widespread adoption, the OTPs have become a primary target for cybercriminals. Attackers have developed sophisticated techniques to steal OTPs, leading to an increase in fraud incidents, unauthorized transactions, and identity theft. The vulnerability of OTPs has raised concerns about their reliability, particularly in high-value financial transactions where unauthorized access can result in significant monetary losses.

While the OTPs are introduced as a means of strengthening authentication, they have increasingly become susceptible to fraud. Phishing attacks, social engineering, SIM swapping, and man-in-the-middle attacks have all been exploited to intercept OTPs and gain unauthorized access to user accounts. The Phishing scams involve attackers impersonating legitimate entities, such as banks or service providers, tricking users into revealing their OTPs. Another common attack is SIM swapping, where fraudsters deceive mobile carriers into transferring a victim's phone number to a new SIM card under their control, allowing them to intercept OTPs and reset account credentials.

Additionally, social engineering tactics have been widely used to manipulate users into sharing their OTPs under false pretences. Fraudsters may pose as bank representatives, claiming that OTP verification is required to "secure an account" or "reverse a fraudulent transaction." Once the user unknowingly provides the OTP, the attacker gains access to their accounts and executes unauthorized transactions.

One of the fundamental weaknesses of current OTP systems is that they do not inherently verify user intent. Once an OTP is generated, it is blindly trusted for authentication, regardless of whether the user willingly provided it or was tricked into doing so. This flaw makes OTPs ineffective in preventing fraudulent transactions, even when combined with multi-factor authentication (MFA). As cybercriminals continue to develop more advanced methods of bypassing OTP security, there is an urgent need for an enhanced authentication mechanism that can offer stronger fraud prevention and user intent verification.

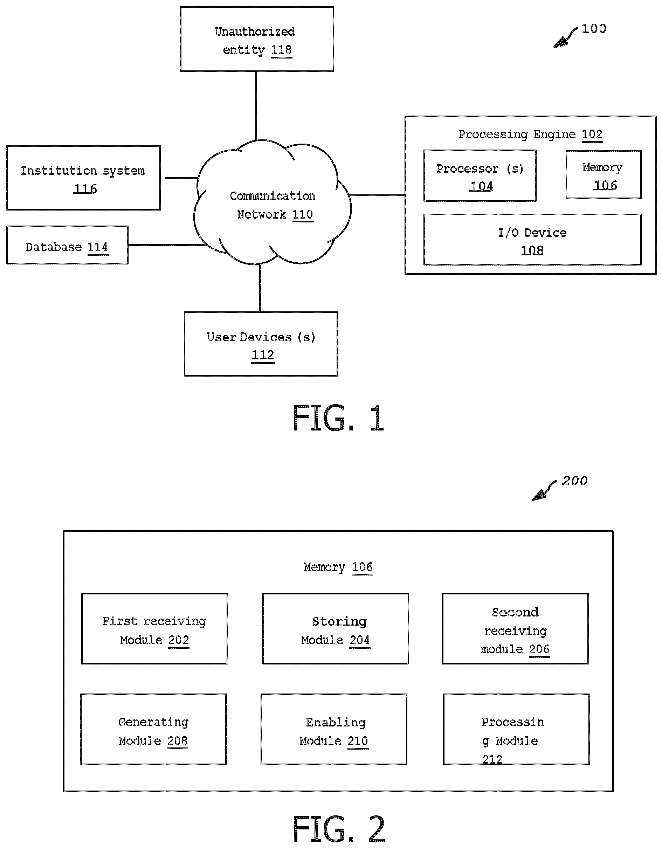

To overcome these challenges, the present disclosure introduces an enhanced OTP authentication mechanism that integrates a user-configured intent verification system. Unlike traditional OTPs, the present disclosure requires users to provide an intent code along with the OTP, which communicates the intended nature of the transaction. The intent code is a predefined by the user and linked to specific transaction types, such as monetary transactions, non-monetary activities, high-value transfers, fraud alerts, or emergency distress signals. By requiring an additional intent verification step, the present disclosure ensures that the OTPs cannot be misused by fraudsters even if they are intercepted. If an attacker attempts to use a stolen OTP without the correct intent code, the present disclosure detects the mismatch and automatically rejects the transaction while triggering an alert. The added layer of security significantly reduces the risk of OTP-based fraud and provides users with greater control over their financial transactions. The present disclosure enhances traditional OTP security by ensuring that each authentication request is validated based on the user's explicit intent, making it much harder for fraudsters to misuse OTPs even if they obtain them. Further, the present disclosure also offers flexibility for financial institutions to define custom intent-based security measures, further strengthening fraud detection mechanisms in digital transactions. The proposed disclosure is further explained in detail in FIGs. 1 to 6.

FIG. 1 illustrates a block diagram of an exemplary system 100 for enhancing the OTP, in accordance with an exemplary embodiment. The system 100 may comprise a processing engine 102, a user device 112, a database 114, an institution system 116, and an unauthorized entity 118 communicatively coupled to each other through a wired or wireless communication network 110. The processing engine 102 may comprise a processor 104, a memory 106 and an input/output (I/O) device 108.

In an embodiment, examples of processor(s) 104 may comprise, but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices. The processor 104 is responsible for executing the instructions stored in the memory 106 to carry out the functionality of the system 100, comprising optimizing state synchronization in the IoT network.

In an embodiment, the memory 106 may store instructions and data, comprising one or more modules that, when executed by the processor 104, may cause the processor 104 to recognize mobile fingerprint, as will be discussed in greater detail herein below. In an embodiment, the memory 106 may be a non- volatile memory or a volatile memory. In an embodiment, the memory 106 may also store a single module or a combination of different modules for mobile fingerprint recognition. Examples of non-volatile memory may comprise but are not limited to, a flash memory, a Read Only Memory (ROM), a Programmable ROM (PROM), Erasable PROM (EPROM), and Electrically EPROM (EEPROM) memory. Further, examples of volatile memory may comprise but are not limited to, Dynamic Random Access Memory (DRAM), and Static Random-Access memory (SRAM).

In an embodiment, the I/O device 108 may comprise of variety of interface(s), for example, interfaces for data input and output devices, and the like. The I/O device 108 may facilitate inputting of instructions by a user communicating with the processing engine 102. In an embodiment, the I/O device 108 may be wirelessly connected to the processing engine 102 through wireless network interfaces such as Bluetooth^{®}, infrared, or any other wireless radio communication known in the art. In an embodiment, the I/O device 108 may be connected to a communication pathway for one or more components of the processing engine 102 to facilitate the transmission of inputted instructions and output results of data generated by various components such as, but not limited to, processor(s) 104 and memory 106.

In an embodiment, the communication network 110 may be a wired or a wireless network or a combination thereof. The communication network 110 can be implemented as one of the different types of networks, such as but not limited to, ethernet IP network, intranet, local area network (LAN), wide area network (WAN), an Internet of Things (IoT) network or a Metropolitan Area Network (MAN). Various devices in the system 100 may be configured to connect to the communication network 110, in accordance with various wired and wireless communication protocols. Examples of such wired and wireless communication protocols may comprise, but are not limited to, a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols. Further the communication network 110 may comprise a variety of network devices, comprising routers, bridges, servers, computing devices, storage devices, and the like.

In an embodiment, the processing engine 102 may be implemented in at least one of the Institution device 116 and as a separate entity in the system 100. In an embodiment, the processing engine 102 may be a server or a component that is capable of enabling specific types of data processing tasks such as processing monetary requests, generating secure codes, etc. based on a set of predefined set of instructions. In an embodiment, the processing engine 102 may receive a first request associated with enabling an OTP service from a user device 112. The user device 112 may be a laptop, a computer, a tablet, a smartphone, a camera, etc. Further, the processing engine 102 may store a plurality of intent codes using the user device 112. The plurality of intent codes may be additional user-defined codes that are sent along with the OTP to specify the intent or purpose of a transaction. The intent code serves as an extra layer of authentication, ensuring that a transaction is executed only if the intent code provided by the user matches the expected purpose of the transaction. In an embodiment, a user may configure specific intent codes that correspond to different transaction types. In an embodiment, the intent code may comprise one or more characters, numerals, and special characters. the intent codes may be any one of an alphanumeric code (such as AA1, 1AA), numeric code (such as 123, 12345, 001657), or a combination of special character (such as 1@232, qbvf@1234). In an exemplary embodiment, the plurality of intent codes may be three digit numeric codes such as a 000 intent code corresponding to a Non-monetary action (e.g., login), a 101 intent code corresponding to regular monetary transaction, a 102 intent code corresponding to a high-value transaction (above daily limit), a 505 intent code corresponding to Fraud alert (blacklist & security check), and a 507 intent code corresponding to Emergency distress (notify law enforcement). The plurality of intent codes may be stored in the database 114, which may be accessible to the user device 112 and the institution system 116.

In an embodiment, the processing engine 102 may receive a second request associated with a transaction from the user device 112. Each of the plurality of intent codes corresponds to a transaction type of the second request. Further, the processing engine 102 may generate the OTP in response to the second request. upon generating the OTP, the processing engine 102 further transmits the generated OTP to the user device 112 from the institution system 116. The institution system 116 may be an infrastructure used by a financial institution such as a bank, payment provider, or online service to manage authentication, transaction processing, and security mechanisms. The institution system 116 is responsible for generating, verifying, and enforcing security protocols to protect user accounts and financial transactions.

In an embodiment, the processing engine 102 may enable the user device 112 to transmit the generated OTP along with one of the plurality of intent codes to the institution system 116. The OTP and one of the plurality of intent codes is transmitted to the institution system 116 within a predefined time period to be considered valid for processing the second request. In a first exemplary embodiment, the OTP and one of the plurality of intent codes are transmitted as a single message. For an instance, the intent code may be prefixed before the OTP by a user of the user device 112 for transmitting it to the institution system 116. In another example, the intent code may be postfixed after the OTP by the user of the user device 112 for transmitting it to the institution system 116. In a second exemplary embodiment, the OTP and one of the plurality of intent codes are transmitted as two different messages which are sent one after another. Herein, the OTP can be sent as a first message and then, one of the plurality of intent codes can be sent as a second message. Alternatively, one of the plurality of intent codes can be sent as a first message and then, the OPT can be sent as a second message.

Further, the processing engine 102 may process the second request based on the transmitted OTP and the associated one of the plurality of intent codes to the institution system 116. For processing the second request, the processing engine 102 may authorize the transaction associated with the second request if the intent code matches with the transaction type of the second request. Further, the processing engine 102 may reject the transaction associated with the second request, if the intent code does not match with the transaction type of the second request.

FIG. 2 illustrates a functional block diagram 200 of various modules within the memory 106 of the system 100 for enhancing the OTP, in accordance with an exemplary embodiment. In an embodiment, the memory 106 may comprise a first receiving module 202, a storing module 204, a second receiving module 206, a generating module 208, an enabling module 210, and a processing module 212. In an embodiment, the modules 202-212 may be implemented in at least one of the Institution system 116 and as separate entities in the system 100.

The first receiving module 202 may be configured to receive a first request associated with enabling the OTP service from the user device 112. The first request is related to activating or setting up the OTP authentication for a user account. The user device 112 may be a user's mobile phone, computer, or other registered device. The first receiving module 202 identifies the first request as an OTP activation request. Further, the first receiving module 202 may validate user identity such as login credentials, security questions. The first receiving module 202 may forward the first request to the authentication system to configure OTP settings for the user.

The storing module 204 may be configured to a plurality of intent codes using the user device 112. The storing module 204 may be capable of saving multiple intent codes, meaning a user may define different codes for different transaction types. The plurality of intent codes are set up and configured directly by the user through the user device 112 such as mobile phone, computer, or another registered device. In an embodiment, the user may log into their authentication application on the user device 112. The authentication application provides an option to enable the plurality of intent code. Further, the user may define the plurality of intent codes for different types of transactions. The plurality of intent codes may be 000, 101, 102, 505, and 507. Once the user enters the intent codes, the storing module 204 records and saves the plurality of intent codes in the institution system 116 secure database 114. In an embodiment, the plurality of intent codes are linked to the user's account and transaction authentication process. The storing module 204 ensures that the stored codes are encrypted and protected from unauthorized access.

The second receiving module 206 may be configured to receive a second request associated with a transaction from the user device 112. Each of the plurality of intent codes corresponds to a transaction type of the second request. The second receiving module 206 ensures that each transaction is properly classified based on the intent code submitted by the user. Each intent code is predefined and corresponds to a specific transaction type, ensuring that only valid transactions are processed while fraudulent or unauthorized attempts are blocked. In an embodiment, the second request may be initiated by an unauthorized entity 118 without the knowledge of the user 112 or by luring the user 112.

The generating module 208 may be configured to generate the OTP in response to the second request. Upon generating the OTP, the generated OTP is transmitted to the user device 112 from the institution system 116. The OTP and one of the plurality of intent codes is transmitted to the institution system 116 within a predefined time period to be considered valid for processing the second request. In an embodiment, the generating module 208 a unique OTP (e.g., 653982) based on Random Number Generation (RNG) for security and Time-based OTP.

In an embodiment, the enabling module 210 may be configured to enable the user device 112 to transmit the generated OTP along with one of the plurality of intent codes to the institution system 116. The OTP and one of the plurality of intent codes is transmitted to the institution system 116 within a predefined time period to be considered valid for processing the second request. The enabling module 210 is responsible for ensuring that the user device 112 is capable of transmitting both the OTP and the intent code to the institution system 116 within a specific time limit. The enabling module 210 plays a key role in securely handling authentication and transaction verification by ensuring that the correct OTP and intent code are transmitted to the institution system 116 before they expire. The enabling module 210 also ensures the device formats and encrypts the OTP and intent code before transmission. The OTP may be sent to the user via a SMS, Email, Push notification, and an authenticator application. Further, the user may enter the OTP and the intent code.

The processing module 212 may be configured to process the second request based on the transmitted OTP and the associated one of the plurality of intent codes to the institution system 116. Further, the processing module 212 may authorize the transaction associated with the second request if the intent code matches with the transaction type of the second request. The processing module 212 may reject the transaction associated with the second request, if the intent code does not match with the transaction type of the second request. The processing module 212 ensures that the OTP and the associated intent code provided by the user match the expected values before authorizing or rejecting a transaction. The processing module 212 acts as the final security checkpoint before a transaction is processed. Further, the processing module 212 handles transaction processing after receiving an OTP and an intent code from the user. Based on the transmitted OTP and the associated one of the plurality of intent codes to the institution system 116, the processing module 212 checks is the OTP is valid and within the time limit and if the intent code matches the expected transaction type. If the intent code correctly corresponds to the type of transaction being performed, the transaction is approved. Further, if there is a mismatch, the processing module 212 rejects the transaction and may trigger an alert.

It should be noted that all such aforementioned modules 202-212 may be represented as a single module or a combination of different modules. Further, as will be appreciated by those skilled in the art, each of the modules 202-212 may reside, in whole or in parts, on one device or multiple devices in communication with each other. In some embodiments, each of the modules 202-212 may be implemented as dedicated hardware circuit comprising custom application-specific integrated circuit (ASIC) or gate arrays, off-the-shelf semiconductors such as logic chips, transistors, or other discrete components. Each of the modules 202-212 may also be implemented in a programmable hardware device such as a field programmable gate array (FGPA), programmable array logic, programmable logic device, and so forth. Alternatively, each of the modules 202-212 may be implemented in software for execution by various types of processors (e.g. processor 104). An identified module of executable code may, for instance, comprise one or more physical or logical blocks of computer instructions, which may, for instance, be organized as an object, procedure, function, or other construct. Nevertheless, the executables of an identified module or component need not be physically located together but may comprise disparate instructions stored in different locations which, when joined logically together, comprise the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for mobile fingerprint recognition. For example, the exemplary system 100 and the associated processing engine 102 may enhance security of the OTP discussed herein. In particular, as will be appreciated by those of ordinary skill in the art, control logic and/or automated routines for performing the techniques and steps described herein may be implemented by the system 100 and the associated processing engine 102 either by hardware, software, or combinations of hardware and software. For example, suitable code may be accessed and executed by the one or more processors 104 on the system 100 to perform some or all of the techniques described herein. Similarly, application specific integrated circuits (ASICs) configured to perform some, or all of the processes described herein may be comprised in the one or more processors 104 on the system 100.

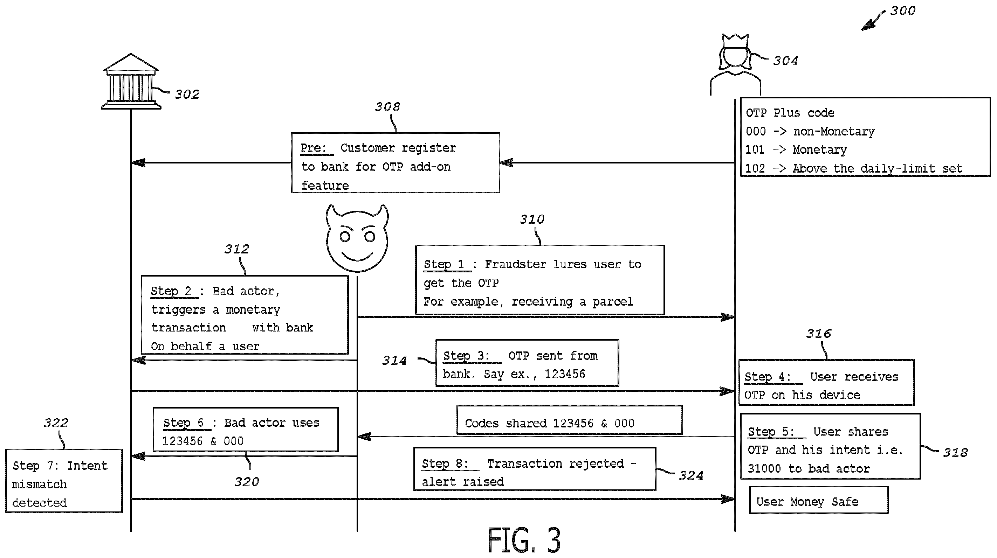

FIG. 3 illustrates an exemplary flow chart 300 for enhancing the OTP, in accordance with an exemplary embodiment. FIG. 3 is explained in conjunction with the FIGs. 1 and 2. FIG. 3 represent a request flow between an institution system 302 (analogous to the institution system 116, a user 304, and an unauthorized entity 118.

In an embodiment, the institution system 302 may be a financial institution, such as a bank, that provides OTP-based security for transactions. Further, the user 304 may be a legitimate customer registered with the bank for OTP authentication. The unauthorized entity 118 may be a fraudster attempting to perform a fraudulent transaction by tricking the user into sharing the OTP.

At step 308, the user 304 may registers with the institution system 302 to enable the OTP-based authentication for transactions. The institution system 302 enable the user to set up the plurality of intent codes, which are assigned to different types of transactions. The plurality of intent codes may comprise a 000 corresponding to the non-monetary transactions, a 101 corresponding to the monetary transactions, a 102 corresponding to the high value transactions.

At step 310, the unauthorized entity 118 may trick the user to get the OTP for a transaction. The unauthorized entity 118 may employ one of the scam such as phishing (the unauthorized entity 118 may pretends to be from a bank, fake delivery scam (OTP for confirming a parcel delivery) and social engineering (account will be blocked unless you provide the OTP).

At step 312, the unauthorized entity 118 may initiates a monetary transaction from the user's bank account without their consent. The transaction request is sent to the institution system 302.

At step 314, the institution system 302 generates an OTP and sends it to the registered device of the user 302. The OTP may a numeric or alpha numeric code valid for a specific period of time such as "123456".

At step 316, the user 304 gets the OTP (123456) on their registered device such as mobile phone via SMS, email, or authentication app.

At step 318, the unauthorized entity 118 convinces the user 302 to share the OTP. Further, the user 302 unknowingly provides an incorrect intent code such as user provides OTP 123456 and intent code 000 (non-monetary), instead of the required intent code 101 (monetary).

At step 320, the unauthorized entity 118 enters the OTP (123456) and the intent code (000) into the institution system 302. The unauthorized entity 118 attempts to bypass security, but the intent code 000 is meant for non-monetary transactions, whereas the transaction is actually monetary.

At step 322, the institution system 302 verifies the OTP and the intent code. Ther OTP may match the generated OTP (123456) but the intent code does not match the expected transaction type (000 instead of 101). The mismatch is flagged as a security risk, preventing the fraudulent transaction from proceeding.

At step 324, since the intent code does not align with the transaction type, the institution system 302 rejects the transaction. An alert is raised, notifying the bank and the user 304 of the fraud attempt. Finally, the user 302 funds remain safe as the fraudulent transaction is blocked.

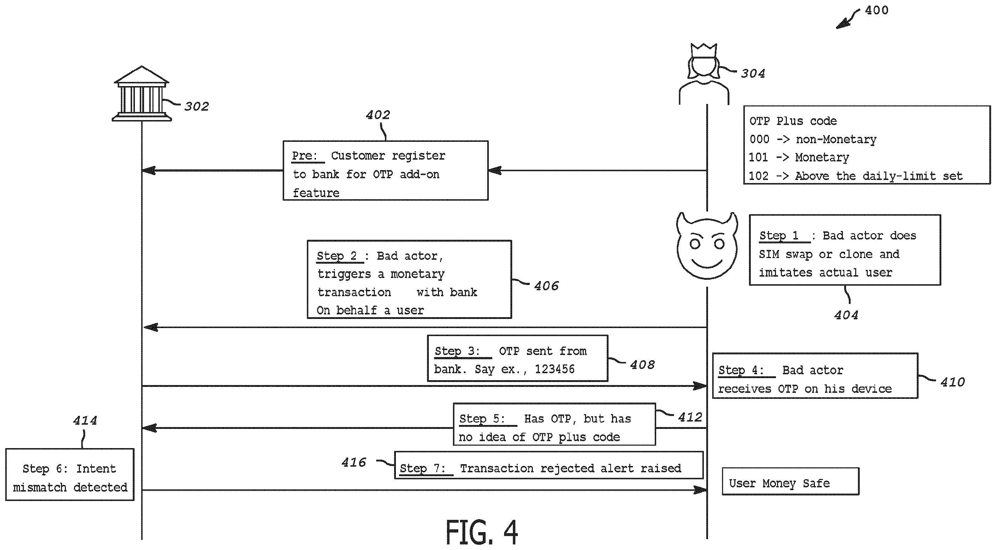

FIG. 4 illustrates an exemplary flow chart 400 for enhancing the OTP, in accordance with an exemplary embodiment. FIG. 4 is explained in conjunction with the FIGs. 1, 2, and 3. FIG. 4 represent a request flow between the institution system 302, the user 304, and the unauthorized entity 118. In an embodiment, the unauthorized entity 118 attempts to gain unauthorized access to the user's 304 account by performing a SIM swap or cloning attack.

At step 402, the user 304 registers with the institution system 302 to enable the OTP-based authentication for transactions. The institution system 302 enable the user to set up the plurality of intent codes, which are assigned to different types of transactions. The plurality of intent codes may comprise a 000 corresponding to the non-monetary transactions, a 101 corresponding to the monetary transactions, a 102 corresponding to the high value transactions. The OTP-based authentication for transactions links the OTP verification with intent codes to distinguish between different types of transactions.

At step 404, the unauthorized entity 118 hijacks the user's phone number by performing a SIM swap attack or cloning the user's SIM card. By doing this, the unauthorized entity 118 receives all SMS messages, comprising OTPs, intended for the actual user 304.

At step 406, the unauthorized entity 118 initiates a monetary transaction using stolen banking credentials or other social engineering tactics. The transaction request is sent to the institution system 302.

At step 408, the institution system 302 generates an OTP for transaction verification. The OTP is sent to the user's registered mobile number, but due to SIM swap, it is received by the unauthorized entity 118 instead of the legitimate user 304.

At step 410, the unauthorized entity 118 intercepts the OTP on their device because they now control the user's mobile number.

At step 412, the unauthorized entity 118 may successfully obtained the OTP ("123456") but is unaware of the intent code requirement. The unauthorized entity 118 may attempts to enter the OTP (123456) and an incorrect intent code (000 for a non-monetary transaction). The expected intent code may be 101 for a monetary transaction, leading to verification failure.

At step 414, the institution system 302 cross-verifies the received OTP and intent code. The mismatch is flagged as a fraud attempt, preventing the transaction from being processed.

At step 416, since the intent code does not align with the transaction type, the institution system 302 rejects the transaction. An alert is raised, notifying the bank and the user of the fraudulent attempt. Finally, the user's 304 funds remain secure, as the fraudulent transaction is blocked before it may be processed.

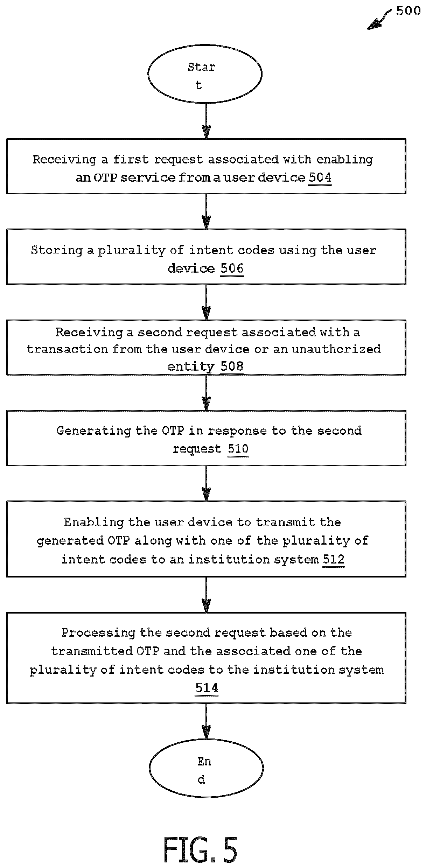

FIG. 5 illustrates an exemplary flow chart of a method 500 for enhancing the OTP, in accordance with an exemplary embodiment. It will be understood that each block of the flow diagram of the method 500 may be implemented by various means, such as hardware, firmware, processor, circuitry, and/or other communication devices associated with execution of software comprising one or more computer program instructions. For example, one or more of the procedures described above may be embodied by computer program instructions. In this regard, the computer program instructions which embody the procedures described above may be stored by a memory 106 of the processing engine 102, employing an embodiment of the present disclosure and executed by the processor 104. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram support combinations of means for performing the specified functions and combinations of operations for performing the specified functions for performing the specified functions. It will also be understood that one or more blocks of the flow diagram, and combinations of blocks in the flow diagram, may be implemented by special purpose hardware-based computer systems which perform the specified functions, or combinations of special purpose hardware and computer instructions.

FIG. 5 is explained in conjunction with elements from FIGs. 1, 2, 3, and 4. At step 502, the method 500 is initiated. The method 500, at step 504 may comprise receiving a first request associated with enabling an OTP service from a user device. The user sends a request from their device such as smartphone, tablet, or computer to register and enable OTP authentication with the institution system. The request is transmitted securely to the institution system such as bank server or financial institution. The request may comprise User's account details, device information, authentication details. The institution system receives the OTP activation request. Further, the institution system validates the request by checking whether the user is registered with the institution, whether the user device matches the registered device on record, and whether the user device matches the registered device on record.

The method 500, at step 506 may comprise storing a plurality of intent codes using the user device. Each of the plurality of intent codes corresponds to a transaction type of the second request, and the plurality of intent codes are predefined by the user device. The institution system stores a plurality of intent codes using the user device. The plurality of intent codes are linked to different transaction types and serve as an additional layer of security during OTP-based authentication. The plurality of intent codes are predefined by the user device and ensure that OTPs may not be misused by unauthorized entities such as fraudsters using social engineering or SIM swap attacks. The plurality of intent codes are security-enhanced numeric or alphanumeric identifiers associated with different transaction types. The plurality of intent codes help the institution system verify whether the OTP is being used for the intended transaction. Further, the plurality of intent codes is stored using the user device and securely linked to the user's profile within the institution system. By storing intent codes, the institution system ensures that each OTP is paired with a predefined intent, making it difficult for attackers to reuse an OTP for unauthorized transactions.

The method 500, at step 508 may comprise receiving a second request associated with a transaction from the user device. The institution system receives a second request associated with a transaction from the user device. The second request is a transaction authorization request sent from the user device to the institution system such as a bank's server. In an embodiment, the second request may contain user identification such as Account details, mobile number, and device ID and Transaction Details such as Amount, recipient, type of transaction (e.g., money transfer, bill payment).

The method 500, at step 510 may comprise generating the OTP in response to the second request. Upon generating the OTP, the method 500 further comprises transmitting the generated OTP to the user device from the institution device. The institution system verifies the details of the second request, comprising the user's identity, transaction type, amount, and intent code. If the request is valid, the institution system proceeds to generate the OTP. The institution system generates a unique, single-use OTP. The OTP is randomly generated using cryptographic techniques to prevent predictability. Further, the OTP is time-sensitive, meaning it is only valid for a limited duration (e.g., 5 minutes). In an embodiment, the generated OTP is associated with specific transaction details, comprising user ID/account number, transaction type (monetary, non-monetary, high-value transfer, etc.), intent code (predefined by the user), and transaction amount and recipient, ensuring that the OTP is used only for the intended transaction type. Once the OTP is generated, the institution system transmits it securely to the registered user device. The OTP is sent to the user's registered device via SMS, Email, push notification.

The method 500, at step 512 may comprise enabling the user device to transmit the generated OTP along with one of the plurality of intent codes to the institution system. The OTP and one of the plurality of intent codes is transmitted to the institution system within a predefined time period to be considered valid for processing the second request. Once the user receives the OTP, the user device is configured to send the OTP and the intent code to the institution system. The transmission is done through a secure channel to the institution system, ensuring that the OTP is not intercepted or altered by malicious actors. The user device may auto-fill the OTP if using a secure banking app. The user device sends the OTP and the selected intent code to the institution system via a secure channel.

The method 500, at step 514 may comprise processing the second request based on the transmitted OTP and the associated one of the plurality of intent codes to the institution system. In an embodiment, the method 500 may comprise at least one of authorizing the transaction associated with the second request, if the intent code matches with the transaction type of the second request and rejecting the transaction associated with the second request if the intent code does not match with the transaction type of the second request. The institution system processes the second request based on the OTP and the intent code, ensuring that a transaction is authorized only if the OTP is valid, and the intent code correctly matches the transaction type. If the intent code does not match, the institution system rejects the transaction to prevent fraud. The institution system checks whether the received OTP is correct (matches the OTP issued for this transaction), Within the predefined time validity period, and used only once (not replayed from an old session). If the OTP is invalid or expired, the transaction is rejected immediately. Further, the institution system compares the received intent code with the transaction type. If there is a match, the transaction proceeds. If there is a mismatch, the transaction is rejected, and a security alert is triggered.

In an exemplary embodiment, Alice, a banking customer, registers for the OTP, which requires her to provide an intent code when using an OTP. A fraudster, posing as a delivery agent, calls Alice and claims she needs to verify a parcel delivery. Simultaneously, the fraudster initiates an unauthorized monetary transaction using Alice's banking credentials. Alice receives an OTP but, believing it is for parcel verification, selects intent code "000" (non-monetary) and shares both with the fraudster. When the fraudster attempts to use the OTP to complete the unauthorized monetary transaction, the bank's security system detects an intent mismatch and rejects the transaction. An alert is raised, notifying Alice of a potential fraud attempt, ensuring her money remains safe.

The plurality of intent codes adds a crucial layer of authentication that prevents unauthorized transactions by requiring both an OTP and a matching intent code. The approach effectively stops phishing attacks, prevents OTP-based fraud, and mitigates SIM swap risks. Even if a fraudster gains access to an OTP, the lack of the correct intent code ensures the transaction is automatically rejected. Additionally, banks benefit from reduced fraud-related losses and enhanced customer trust, as users experience a more secure and fraud-resistant transaction process. The intent mismatch detection mechanism ensures that if an OTP is compromised, it cannot be misused for unauthorized transactions, making financial fraud significantly more difficult to execute.

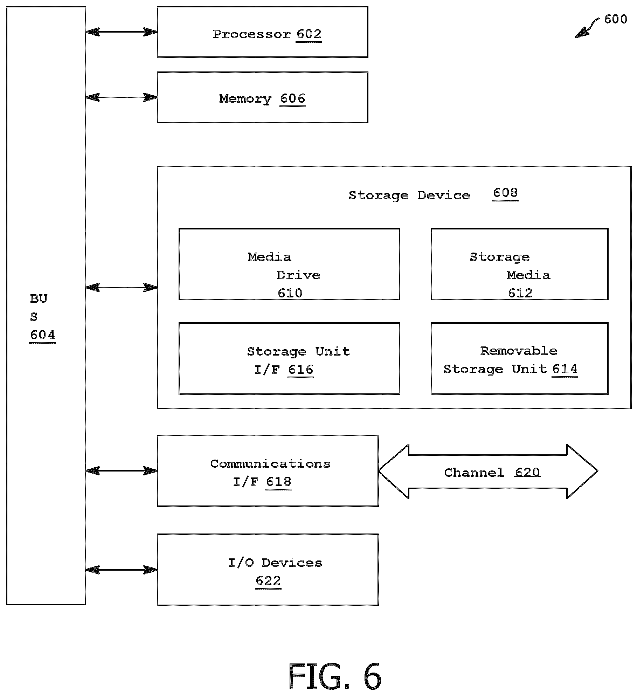

FIG. 6 illustrates an exemplary computing system 600 for implementation of a method for enhancing the OTP, in accordance with an exemplary embodiment. The computing system 600 may represent, for example, an end device that involves network connection. In an embodiment, the end device may comprise, but not limited to a smart phone, a laptop computer, a desktop computer, a workstation, a portable computer, a handheld, or a mobile device. In an embodiment, the computing system 600 may represent, for example, an end-device with the provision of mobility. Examples of the end-device with the provision of mobility may comprise but not limited to a Telematics Control Unit (TCU), an infotainment system, a Vehicle-to-Everything Device (V2X) device, an On-board Diagnostics Device (OBD), an Advanced Driver Assistance Systems (ADAS) sensor, and the like. The computing system 600 may comprise one or more processors, such as a processor 602 that may be implemented using a general or special purpose processing engine such as, for example, a microprocessor, microcontroller or other control logic. In this example, the processor 602 is connected to a bus 604 or other communication medium. In an embodiment, examples of processor 602 may comprise, but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices, system-on-a-chip processors or other future processors.

The computing system 600 may also comprise a memory 606 (main memory), for example, Random Access Memory (RAM) or other dynamic memory, for storing information and instructions to be executed by the processor 602. The memory 606 also may be used for storing temporary variables or other intermediate information during execution of instructions to be executed by the processor 602. The computing system 600 may likewise comprise a read only memory ("ROM") or other static storage device coupled to bus 604 for storing static information and instructions for the processor 602.

The computing system 600 may also comprise a storage device 608, which may comprise, for example, a media drive 610 and a removable storage unit 614. The media drive 610 may comprise a drive or other mechanism to support fixed or removable storage media, such as a hard disk drive, a floppy disk drive, a magnetic tape drive, an SD card port, a USB port, a micro-USB, an optical disk drive, a CD or DVD drive (R or RW), or other removable or fixed media drive. A storage media 612 may comprise, for example, a hard disk, magnetic tape, flash drive, or other fixed or removable medium that is read by and written to by the media drive 610. As these examples illustrate, the storage media 612 may comprise a computer-readable storage medium having stored there in particular computer software or data.

In some embodiments, the storage devices may comprise other similar instrumentalities for allowing computer programs or other instructions or data to be loaded into the computing system 600. Such instrumentalities may comprise, for example, a removable storage unit 614 and a storage unit interface 616, such as a program cartridge and cartridge interface, a removable memory (for example, a flash memory or other removable memory module) and memory slot, and other removable storage units and interfaces that allow software and data to be transferred from the removable storage unit 614 to the computing system 600.

The computing system 600 may also comprise a communications interface 618. The communications interface 618 may be used to allow software and data to be transferred between the computing system 600 and external devices. Examples of the communications interface 618 may comprise a network interface (such as an Ethernet or other NIC card), a communications port (such as for example, a USB port, a micro-USB port), Near field Communication (NFC), etc. Software and data transferred via the communications interface 618 are in the form of signals which may be electronic, electromagnetic, optical, or other signals capable of being received by the communications interface 618. These signals are provided to the communications interface 618 via a channel 620. The channel 620 may carry signals and may be implemented using a wireless medium, wire or cable, fiber optics, or another communications medium. Some examples of the channel 620 may comprise a phone line, a cellular phone link, an RF link, a Bluetooth link, a network interface, a local or wide area network, and other communications channels.

The computing system 600 may further comprise Input/Output (I/O) devices 622. Examples may comprise, but are not limited to a display, keypad, microphone, audio speakers, vibrating motor, LED lights, etc. The I/O devices 622 may receive input from a user and also display an output of the computation performed by the processor 602. In this document, the terms "computer program product" and "computer-readable medium" may be used generally to refer to media such as, for example, the memory 606, the storage devices 608, the removable storage unit 614, or signal(s) on the channel 620. These and other forms of computer-readable media may be involved in providing one or more sequences of one or more instructions to the processor 602 for execution. Such instructions, generally referred to as "computer program code" (which may be grouped in the form of computer programs or other groupings), when executed, enable the computing system 600 to perform features or functions of embodiments of the present disclosure.

In an embodiment where the elements are implemented using software, the software may be stored in a computer-readable medium and loaded into the computing system 600 using, for example, the removable storage unit 614, the media drive 610 or the communications interface 618. The control logic (in this example, software instructions or computer program code), when executed by the processor 602, causes the processor 602 to perform the functions of the disclosure as described herein.

In an embodiment, the present disclosure discloses a non-transitory computer-readable medium storing computer-executable instructions for enhancing the OTP. The computer-executable instructions is configured for receiving a first request associated with enabling an OTP service from a user device. Further, the computer-executable instructions is configured for storing a plurality of intent codes using the user device. The computer-executable instructions is further configured for receiving a second request associated with a transaction from the user device. Further, the computer-executable instructions is configured for generating the OTP in response to the second request. The computer-executable instructions is further configured for enabling the user device to transmit the generated OTP along with one of the plurality of intent codes to an institution system. Further, the computer-executable instructions is configured for processing the second request based on the transmitted OTP and the associated one of the plurality of intent codes to the institution system.

As will be appreciated by those skilled in the art, the techniques described in the various embodiments discussed above are not routine, or conventional, or well understood in the art. The techniques discussed above provide for innovative solutions to address the challenges associated with enhancing security of the OTP. The disclosed techniques offer several advantages over the existing methods as listed in below paragraphs.

The present disclosure introduces a method and system that ensures that transactions are verified based on both OTP and intent codes, preventing unauthorized fund transfers.

The present disclosure introduces a method and a system that reduces the success rate of fraudsters impersonating bank officials or using deceptive tactics to obtain OTPs.

The present disclosure introduces a method and system that prevents unauthorized transactions even when an OTP is sent to a compromised device.

The present disclosure provides a method and a system that automatically detects anomalies when an OTP is used with an incorrect intent code.

The present disclosure introduces a system and a method that works within existing mobile banking applications and SMS-based OTP systems with minimal user friction.

The present disclosure helps financial institutions reduce fraud-related liabilities and improve risk management.

The disclosed techniques offer several applications as listed in below paragraphs.

The present disclosure may be used in digital banking and financial transactions adding an extra layer of authentication for transactions exceeding predefined limits.

The present disclosure may be used in mobile and internet banking security preventing fraudulent attempts to take over accounts using OTP-based verification.

The present disclosure may be used in telecom and mobile network security ensuring that OTPs issued for number updates are not used for fraud.

The present disclosure may be used in enterprise and corporate security securing remote access to corporate networks and confidential data.

The present disclosure may be used in government and public sector services ensuring secure access to tax records and sensitive government portals.

Many modifications and other embodiments of the disclosure set forth herein will come to mind to one skilled in the art to which the disclosure pertains having the benefit of the teachings presented in the foregoing descriptions and the associated drawings. Therefore, it is to be understood that the disclosure is not to be limited to the specific embodiments disclosed and that modifications and other embodiments are intended to be comprised within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

It is to be understood that the above description is intended to be illustrative, and not restrictive. For example, the above-discussed embodiments may be used in combination with each other. Many other embodiments will be apparent to those of skill in the art upon reviewing the above description.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

The benefits and advantages which may be provided by the present disclosure have been described above with regard to specific embodiments. These benefits and advantages, and any elements or limitations that may cause them to occur or to become more pronounced are not to be construed as critical, required, or essential features of any or all of the embodiments.

While the present disclosure has been described with reference to particular embodiments, it should be understood that the embodiments are illustrative and that the scope of the disclosure is not limited to these embodiments. Many variations, modifications, additions, and improvements to the embodiments described above are possible. It is contemplated that these variations, modifications, additions, and improvements fall within the scope of the disclosure.

## Claims

1. A method for enhancing a One Time Password (OTP), the method (500) comprising:
receiving, by a processing engine (102), a first request associated with enabling an OTP service from a user device (112);
storing, by the processing engine (102), a plurality of intent codes using the user device (112);
receiving, by the processing engine (102), a second request (312, 406) associated with a transaction from the user device (112) or an unauthorized entity 118;
generating, by the processing engine (102), the OTP in response to the second request (312, 406);
enabling, by the processing engine (102), the user device (112) to transmit the generated OTP along with one of the plurality of intent codes to an institution system (116); and
processing, by the processing engine (102), the second request (312, 406) based on the transmitted OTP and the associated one of the plurality of intent codes to the institution system (116).

2. The method (500) according to claim 1, wherein each of the plurality of intent codes corresponds to a transaction type of the second request (312, 406), and wherein the plurality of intent codes are predefined by the user device (112).

3. The method (500) according to any of the previous claims, wherein upon generating the OTP, the method (500) further comprising transmitting the generated OTP to the user device (112) from the institution system (116).

4. The method (500) according to any of the previous claims, wherein the OTP and one of the plurality of intent codes is transmitted to the institution system (116) within a predefined time period to be considered valid for processing the second request (312, 406).

5. The method (500) according to any of the previous claims, wherein processing the second request (312, 406) based on the transmitted OTP and the associated one of the plurality of intent codes to the institution system (116), further comprising at least one of:
authorizing the transaction associated with the second request (312, 406), if the intent code matches with the transaction type of the second request (312, 406); and
rejecting the transaction associated with the second request (312, 406), if the intent code does not match with the transaction type of the second request (312, 406).

6. A system (100) for enhancing a One Time Password (OTP), the system (100) comprising:
a processing engine (102) coupled to a memory (106), wherein the processing engine (102) is configured to execute instructions stored in the memory (106) to:
receive a first request associated with enabling an OTP service from a user device (112);
store a plurality of intent codes using the user device (112);
receive a second request (312, 406) associated with a transaction from the user device (112) or an unauthorized entity 118;
generate the OTP in response to the second request (312, 406);
enable the user device (112) to transmit the generated OTP along with one of the plurality of intent codes to an institution system (116); and
process the second request (312, 406) based on the transmitted OTP and the associated one of the plurality of intent codes to the institution system (116).

7. The system (100) according to claim 6, wherein each of the plurality of intent codes corresponds to a transaction type of the second request (312, 406), and wherein the plurality of intent codes are predefined by the user device (112).

8. The system (100) according to any of the previous claims, wherein upon generating the OTP, the processing engine (102) is configured to transmit the generated OTP to the user device (112) from the institution system (116).

9. The system (100) according to any of the previous claims, wherein the OTP and one of the plurality of intent codes is transmitted to the institution system (116) within a predefined time period to be considered valid for processing the second request (312, 406).

10. The system (100) according to any of the previous claims, wherein to process the second request (312, 406) based on the transmitted OTP and the associated one of the plurality of intent codes to the institution system (116), the processing engine (102) is further configured to at least one of:
authorize the transaction associated with the second request (312, 406), if the intent code matches with the transaction type of the second request (312, 406); and
reject the transaction associated with the second request (312, 406), if the intent code does not match with the transaction type of the second request (312, 406).

11. A non-transitory computer-readable medium storing computer-executable instructions for enhancing a One Time Password (OTP), the computer-executable instructions configured for:
receiving, by a processing engine (102), a first request associated with enabling an OTP service from a user device (112);
storing, by the processing engine (102), a plurality of intent codes using the user device (112);
receiving, by the processing engine (102), a second request (312, 406) associated with a transaction from the user device (112) or an unauthorized entity 118;
generating, by the processing engine (102), the OTP in response to the second request (312, 406);
enabling, by the processing engine (102), the user device (112) to transmit the generated OTP along with one of the plurality of intent codes to an institution system (116); and
processing, by the processing engine (102), the second request (312, 406) based on the transmitted OTP and the associated one of the plurality of intent codes to the institution system (116).

12. The computer-executable instructions according to claim 11, wherein each of the plurality of intent codes corresponds to a transaction type of the second request (312, 406), and wherein the plurality of intent codes are predefined by the user device (112).

13. The computer-executable instructions according to any of the previous claims, wherein upon generating the OTP, the computer-executable instructions is further configured for transmitting the generated OTP to the user device (112) from the institution system (116).

14. The computer-executable instructions according to any of the previous claims, wherein the OTP and one of the plurality of intent codes is transmitted to the institution system (116) within a predefined time period to be considered valid for processing the second request (312, 406).

15. The computer-executable instructions according to any of the previous claims, wherein processing the second request based on the transmitted OTP and the associated one of the plurality of intent codes to the institution system (116), the computer-executable instructions is further configured for at least one of:
authorizing the transaction associated with the second request (312, 406), if the intent code matches with the transaction type of the second request (312, 406); and
rejecting the transaction associated with the second request (312, 406), if the intent code does not match with the transaction type of the second request (312, 406).
